# EUROPÄISCHE PATENTSCHRIFT

(11) **EP 3 935 013 B1**
(45) Veröffentlichungstag und Bekanntmachung des Hinweises auf die Patenterteilung: **07.09.2022**
(21) Anmeldenummer: 19709038.4
(22) Anmeldetag: 05.03.2019
(51) Int. Cl.: C01B 33/023, C01B 33/025

(54) **RECYCLING VON ORGANOSILICIUMVERBINDUNGEN ENTHALTENDEN MATERIALIEN**
RECYCLING OF MATERIALS CONTAINING ORGANOSILICON COMPOUNDS
RECYCLAGE DE MATÉRIAUX CONTENANT DES COMPOSÉS ORGANOSILICIÉS

(43) Veröffentlichungstag der Anmeldung: 12.01.2022
(73) Patentinhaber: Wacker Chemie AG, 81737 München (DE)
(72) Erfinder: RIMBÖCK, Karl-Heinz, 84431 Heldenstein (DE); MAUTNER, Konrad, 84489 Burghausen (DE)
(74) Vertreter: Fritz, Helmut
(86) Internationale Anmeldenummer: PCT/EP2019/055459
(87) Internationale Veröffentlichungsnummer: WO 2020/177861

(56) Entgegenhaltungen:
- WO-A1-2009/002636
- WO-A1-2013/080981
- WO-A2-2010/037709
- DATABASE WPI Week 198828 Thomson Scientific, London, GB; AN 1988-192944 XP002796108, & JP S63 129009 A (KAWASAKI STEEL CORP) 1. Juni 1988 (1988-06-01)

## Beschreibung

Die Erfindung betrifft ein Verfahren zur Herstellung von metallurgischem Silicium in einem elektrischen Ofen, bei dem Organosiliciumverbindungen zugesetzt werden.

Große Mengen von sogenannten "end-of-life"-Polymeren sowie Nebenan-/Abfällen bei der Herstellung von Polymeren werden deponiert, thermisch recycelt oder mittels Downcycling in Produkte niederer Qualität umgesetzt. Im Vergleich dazu werden nur geringe Mengen der vorgenannten Polymere wirklich im Sinne einer größtmöglichen Rückführung in die Wertschöpfungskette recycelt. Für einen nachhaltigeren, Ressourcen-schonenderen und umweltfreundlicheren Umgang mit den o.g. Materialien werden neue Verfahren benötigt. Im Stand der Technik sind für den Fall von Siliconen als Vertreter von polymeren Materialien vorwiegend Verfahren beschrieben, die den Depolymerisations-Polymerisations-Ansatz verfolgen; d.h.: Depolymerisation von Polysiloxanen in kurzkettige oder cyclische Siloxan-Bausteine, die anschließend erneut zu einer Vielzahl von Produkten verarbeitet werden können. Nachteilig sind bei den bekannten Verfahren v.a. die unvollständige Rückgewinnung von verwertbaren chemischen Verbindungen und/oder Stoffen sowie der hohe Aufwand, um vorstehende Verbindungen überhaupt zu erhalten.

DE19502393 A1 - hierin wird ein Verfahren zur Depolymerisation von additionsvernetztem Siliconkautschukvulkanisat beschrieben, wobei in einem ersten Schritt eine Lösung von Säure in Lösungsmittel in das Siliconkautschukvulkanisat diffundiert, in einem zweiten Schritt das Lösungsmittel abgedampft und in einem dritten Schritt das Siliconkautschukvulkanisat auf mindestens 350 °C erhitzt wird. Nachteilig an dem Verfahren ist, dass das Siliconkautschukvulkanisat nicht vollständig umgesetzt und der wertvolle Kieselsäure-Füllstoff nicht zurückgewonnen wird.

Die US2009281202 offenbart ein Lösungsmittel-freies Verfahren zur Depolymerisation von polymeren Silicon-Materialien unter Rückgewinnung cyclischer oder monomerer Einheiten. Auch hier findet kein vollständiger Umsatz des zu recycelnden Substrats statt. Zudem ist ein saurer Vorabbau sowie zusätzlicher apparativer Aufwand nötig, um nach der sauren Vorbehandlung Lösungsmittel-frei zu depolymerisieren.

Ein Verfahren zum Cracken eines hochmolekularen Siliconpolymers, das aus Siliconabfall erhalten wurde, zu cyclischen Siliconverbindungen wird in EP0523323 B1 offenbart. Das Verfahren umfasst mit Lösen in einem organischen Lösungsmittel, enthaltend eine Oxosäure des Schwefels und anschließendem Erhitzen der Mischung, Zusatz einer Hydroxid-Base bei erhöhter Temperatur und Gewinnung der cyclischen Siliconverbindung durch Destillation der Mischung drei wesentliche Teilschritte. Laut Patentschrift wird mit dem erfindungsgemäß bevorzugten Verfahren 80-95% des zur Verfügung stehenden Silicons zwar ein hoher Grad an Rückgewinnung erreicht, jedoch wird keine Lösung aufgezeigt, wie mit dem zusätzlich im Ausgangsmaterial enthaltenen Wertstoff Kieselsäure weiter verfahren wird. Bezogen auf die Gesamtmasse des Ausgangsmaterials werden somit nur 45-55% des Ausgangsmaterials recycelt und der Wertschöpfungskette erneut verfügbar gemacht. Um auch die restlichen Anteile zu erhalten, müssten aufwendige Trenn- und/oder Reinigungsschritte erfolgen, wobei wiederum Abfälle anfallen.

Ferner sind Verfahren beschrieben, bei denen vor dem eigentlichen Recycling ein Trennschritt durchgeführt werden muss. Ein derartiger Fall wird beispielsweise in der DE102005033063 B3 beschrieben. Das hierin beschriebene Verfahren ist prozesstechnisch aufwendig und das so erhaltene Siliconöl bedarf einer weiteren Aufreinigung, bevor es einer Verwertung zugeführt werden kann.

Gegenstand der Erfindung ist ein Verfahren zur Herstellung von metallurgischem Silicium,
bei dem eine Mischung aus
einer Rohstoffmischung, die Siliciumdioxid und Kohlenstoff enthält und einem Recyclefeed, das Organosiliciumverbindungen enthält,
in einem elektrischen Ofen umgesetzt wird.

Das Verfahren ermöglicht eine größtmögliche Nutzung von zu recycelnden Organosiliciumverbindungen und Organosiliciumverbindungen haltigen Materialien im Sinne einer Rückführung in die industrielle Wertschöpfungskette bezogen auf die chemisch gebundene Energie als auch auf die chemisch gebundenen Elemente Si, O und C.

Die Möglichkeit einer direkten Verwertung der als Nebenprodukt und/oder als Abfall anfallenden Organosiliciumverbindungen und Organosiliciumverbindungen haltigen Materialien bietet einen großen wirtschaftlichen Vorteil. Es entfallen die ein- oder mehrstufige chemische Aufbereitung sowie die daran anschließenden, aufwendigen Trennverfahren, um die Organosiliciumverbindungen zu erhalten. Kosten für die Entsorgung der Organosiliciumverbindungen und Organosiliciumverbindungen haltigen Materialien entfallen ebenfalls. Darüber hinaus kann der Zukauf von Rohstoffen für die Herstellung von Silicium technischer Qualität reduziert werden. Es sind zudem keine zusätzlichen, aufwendigen Apparate und/oder Anlagen zum apparativen Bestand eines Herstellers von metallurgischem Silicium zwingend notwendig.

Durch die Verwertung der Organosiliciumverbindungen in der Herstellung von metallurgischem Silicium werden deutlich mehr Produkte zugänglich als bei dem Depolymerisations-Polymerisationsansatz; so können aus metallurgischem Silicium eine Vielzahl von Silanen hergestellt werden, welche wiederum Ausgangsstoffe für verschiedenste Produktgruppen, wie Reinstsilicium, Siliconelastomere, Siliconöle, funktionelle Siloxane, Siliconharze, Siliconharzformulierungen, lineare und cyclische Polydimethylsiloxane und Silicate und Anwendungsgebiete beispielsweise für Halbleiter, Elektronik, Pharma, Nahrungsmittel und Kosmetik darstellen.

Grundsätzlich sind Verfahren zur Herstellung von metallurgischem Silicium aufwendig und energieintensiv. Die erforderliche Energiezufuhr, die in der Regel elektrisch erfolgt, stellt einen erheblichen Kostenfaktor dar. Die operative Leistung der carbothermischen Reduktion von Siliciumdioxid im elektrischen Ofen hängt entscheidend von den Rohstoffen und den entsprechenden Rezepturen, wie die Rohstoffe dem Reduktionsprozess zugeführt werden, ab. Deshalb war überraschend, dass Organosiliciumverbindungen enthaltendes Material zur Herstellung von metallurgischem Silicium, d.h. Silicium technischer Qualität verwendet werden kann, ohne die Produktivität des Prozesses sowie die Qualität des Produkts zu vermindern.

Der Recyclefeed ist eine Mischung, die Organosiliciumverbindungen und gegebenenfalls Siliciumdioxid und gegebenenfalls weitere Stoffe enthält. Die Organosiliciumverbindungen können in Organosiliciumverbindungen haltigen Materialien enthalten sein. Typische Organosiliciumverbindungen haltige Materialien sind Siliconkautschuke, die als Organosiliciumverbindungen Polysilicone und als Siliciumdioxid Kieselsäuren enthalten.

Dabei kann in Organosiliciumverbindungen haltigen Materialien jedwede Form von Organosiliciumverbindungen und Mischungen von Organosiliciumverbindungen enthalten sein. Beispielhafte Formen von Organosiliciumverbindungen sind: Bei 20°C feste, harzartige, ölige oder flüssige Organosiliciumverbindungen.

Die Organosiliciumverbindungen sind vorzugsweise Organopolysiloxane, auch als Silicone bezeichnet. Der Begriff Silicone sind oligomere oder polymere Verbindungen, in denen Siliciumatome über Sauerstoffatome verbunden sind und in denen die Siliciumatome einen oder mehrere organische Substituenten tragen.

In einer bevorzugten Ausführungsform sind die Organosiliciumverbindungen Silicone, die bevorzugt Siliciumgebundene Hydrocarbylreste, mit 1 bis 20, bevorzugt 1 bis 16, besonders bevorzugt 1 bis 12, insbesondere 1 bis 10 Kohlenstoffatomen je Hydrocarbylrest tragen. Bei den Siliconen handelt es sich insbesondere um Polydimethylsiloxane.

Der Recyclefeed kann neben Organosiliciumverbindungen zudem Füllstoffe bzw. Bindemittel enthalten. Bevorzugte Füllstoffe sind hierbei pyrogene und/oder gefällte Kieselsäure als Zumischung in den Siliconen sowie sogenanntes Microsilica als Bindemittel, das bei der Herstellung von technischem Silicium als Nebenprodukt anfällt.

Der Recyclefeed kann flüssig oder fest sein. Bevorzugt ist der Recyclefeed partikulär.

Dabei können die einzelnen Organosiliciumverbindungen und Organosiliciumverbindungen haltigen Materialien im Falle einer Mehrkomponenten-Mischung jeweils sortenrein als Partikel vorliegen und/oder aus den einzelnen Materialien gezielt Partikel hergestellt werden, z.B. durch Kompaktieren, beispielsweise durch Pressen, Pelletieren, Brikettieren oder Sintern. Das Kompaktieren von Organosiliciumverbindungen und Organosiliciumverbindungen haltigen Materialien ist v.a. dann angezeigt, wenn Partikel mit einer Partikelgröße <1 mm vorliegen und/oder wenn zumindest eine Organosiliciumverbindung oder Organosiliciumverbindung haltiges Material aufgrund seiner Beschaffenheit, beispielsweise zu hohe Porosität, zu geringe Dichte oder zu niedrige Viskosität für den Einsatz als Recyclefeed ungeeignet ist.

Die Partikelmischung des Recyclefeeds weist vorzugsweise einen Partikelgrößenparameter d₅₀ von mindestens 1 mm, bevorzugt von 1 bis 150 mm, besonders bevorzugt von 2 bis 100 mm, insbesondere von 5 bis 50 mm auf. Partikel, die eine Partikelgröße von <1 mm aufweisen, werden teilweise aufgrund der vorherrschenden, relativ hohen Gasgeschwindigkeiten, mit denen die Gase den Ofen durchströmen und letztlich als Abgas verlassen, mitgerissen und dem Prozess damit über das Abgassystem entzogen. Der Austrag von Rohstoffen und/oder des Recyclefeeds vermindert die Wirtschaftlichkeit und gefährdet zudem die Prozessleistung.

Die Bestimmung des Gehalts an Organosiliciumverbindungen im Recyclefeed erfolgt beispielsweise über Gaschromatographie mit Massenspektrometrie-Kopplung.

Vorzugsweise wird im Verfahren in der Rohstoffmischung das Siliciumdioxid aus Quarz und Quarzit ausgewählt. Vorzugsweise wird im Verfahren in der Rohstoffmischung der Kohlenstoff aus Koks, Petrolkoks, Steinkohle, Holzkohle und Holzteilchen ausgewählt.

Die Bestimmung des Silicium-Gehalts des Siliciumdioxids erfolgt bevorzugt über Röntgenfluoreszenzanalyse. Als Nebenbestandteile werden bevorzugt bestimmt: Fe, Al, Ca, Ti, K und Mg.

Das bevorzugte Mol-Verhältnis zwischen Si aus Siliciumdioxid und "fixiertem Kohlenstoff" (C_{fixiert}) in der Rohstoffmischung liegt im Bereich von 0,2 bis 0,7, besonders bevorzugt von 0,3 bis 0,6, ganz besonders bevorzugt von 0,35 bis 0,55, insbesondere von 0,4 bis 0,5.

Unter dem Begriff "fixierter Kohlenstoff" (C_{fixiert}) ist jener feste, brennbare Rückstand eines C-haltigen Materials zu verstehen, der nach Erhitzen einer Probe für eine Dauer von sieben Minuten bei 900 °C - um seine flüchtigen Bestandteile verringert - zurückbleibt. Die Bestimmung des C_{fixiert} kann beispielsweise mittels LECO TGA701 bestimmt werden (http://www.leco.co.za/wp-content/uploads/2012/02/TGA701_COKE_203-821-381.pdf; Probenvorbereitung gemäß ASTM Method D2013 oder ASTM Practice D346)

Der Anteil des Recyclefeeds im Verfahren beträgt, bezogen auf die Summe aus Rohstoffmischung und Recyclefeed, bevorzugt höchstens 20 Gew.-%, besonders bevorzugt höchstens 15 Gew.-%, ganz besonders bevorzugt höchstens 10 Gew.-%, insbesondere höchstens 5 Gew.-%, jedoch mindestens 1 Gew.-%.

Vorzugsweise enthält der Recyclefeed mindestens 50 Gew.-%, besonders bevorzugt mindestens 60 Gew.-%, ganz besonders bevorzugt mindestens 70 Gew.-% und insbesondere mindestens 80 Gew.-% Organosiliciumverbindungen. Die restlichen Gewichtsanteile an den Organosiliciumverbindungen haltigen Materialien entsprechen bevorzugt Stoffen, die beispielsweise als Füllstoffe und/oder Bindemittel vorliegen. Vorzugsweise weisen diese Stoffe einen Heizwert von maximal 120 MJ/kg auf.

Die Bestandteile der Rohstoffmischung sowie der Recyclefeed können zusammen oder getrennt voneinander in den Ofen gegeben werden. Die Zugabe kann dabei manuell oder automatisiert erfolgen.

Vorzugweise beträgt die Temperatur im elektrischen Ofen mindestens 1900 °C. Vorzugsweise wird bei Atmosphärendruck gearbeitet.

Die Herstellung von metallurgischem Silicium wird im Standardwerk "Production of High Silicon Alloys" (A. Schei, J.K. Tuset, H. Tveit, Production of High Silicon Alloys, 1998**,** Tapir forlag, Trondheim) ausführlich beschrieben.

SiO₂ + 2 C → Si (l) + 2 CO (g) (1)

Während der Herstellung liegen Edukte, Intermediate und Produkte in verschiedenen Aggregatszuständen vor: fest (C, SiC, SiO₂, Si), flüssig (Si, SiO₂) sowie gasförmig (vorwiegend CO, SiO). Im Ofen herrscht eine stark reduzierende Atmosphäre, die sich v.a. aus SiO und CO zusammensetzt. SiO₂ und C bewegen sich im laufenden Betrieb nach unten, während SiO und CO nach oben strömen. Hierbei werden intermediäre Spezies gemäß folgender Reaktionsgleichungen (2)-(7) gebildet:

SiO₂ + C → SiO + CO (2)

SiO + 2 C → SiC + CO (3)

SiO₂ + 2 SiC → 3 Si + 2 CO (4)

2 SiO₂ + SiC → 3 SiO + CO (5)

SiO₂ + CO → SiO + CO₂ (6)

2 CO₂ + SiC → SiO + 3 CO (7)

Silicium wird hauptsächlich durch die in Reaktion (8) gezeigte Reaktion gebildet.

SiO + SiC → 2 Si + CO (8)

Für Mischungen partikulärer Stoffe, die Korndurchmesser von überwiegend > 0,1 mm aufweisen, werden üblicherweise Siebanalysen durchgeführt, um die Partikelmischung zu charakterisieren. Die Bestimmung der Korngrößenverteilung mittels Siebanalyse erfolgt nach DIN 66165. Eine Berechnung von mittleren Partikelgrößen/-durchmessern aus Partikelgrößenverteilungen kann nach DIN ISO 9276-2 erfolgen.

### Beispiele:

Es wurden verschiedene Chargenzusammensetzungen - jeweils über einen Produktionstag hinweg - in einem Lichtbogenreduktionsofen eingesetzt und die Performance des Prozesses anhand der Bildung des Nebenprodukts Microsilica gemessen. Dazu wurde der Quotient Si-Mengenäquivalent [Microsilica]/Si-Mengenäquivalent [Charge] für einen Produktionstag bestimmt. Dieser Quotient wird folgend als Verlustquotient (VQ) bezeichnet. Der Prozess gilt bei einem VQ-Wert von 0,15 oder darunter als besonders produktiv. Es wurden verschiedene partikuläre Recyclefeeds in unterschiedlichen Mischungsverhältnissen getestet. Soweit nicht anders vermerkt, wurde der Recyclefeed als Partikelmischung mit einem d₅₀ zwischen 25 und 35 mm eingesetzt. Tabelle 1 gibt einen Überblick über die eingesetzten Recyclefeeds und Tabelle 2 fasst die Ergebnisse der Beispiele zusammen.

Chargen bestanden aus: Rohstoffmischung (SiO₂-Quelle und C-haltige Reduktionsmittel; Mol-Verhältnis Si : fixierter C = 0,4-0,5) sowie gegebenenfalls partikulärem Recyclefeed.

Die Bestimmung des fixierten C erfolgte mittels LECO TGA701 Die Probenvorbereitung erfolgte gemäß ASTM Method D2013.

Die Bestimmung des Silicium-Gehalts der SiO₂-Quelle erfolgte über Röntgenfluoreszenzanalyse. Als Nebenbestandteile wurden folgende Elemente analysiert: Fe, Al, Ca, Ti, K und Mg.

Die Bestimmung des Gehalts an Organosiliciumverbindungen im Recyclefeed erfolgte über Gaschromatographie mit Massenspektrometrie-Kopplung.

**Tabelle 1**

| Recyclefeed | Silicon-Anteil | Nebenbestandteile |
|---|---|---|
| A | 80 Gew.-% | 19 Gew.-% pyrogene Kieselsäure |
| | | 1 Gew.-% Stoff [Heizwert <120 MJ/kg] |
| B | 80 Gew.-% | 10 Gew.-% w pyrogene Kieselsäure |
| | | 10 Gew.-% Stoff [Heizwert <120 MJ/kg] |
| C | 80 Gew.-% | 20 Gew.-% Microsilica |
| D | 70 Gew.-% | 30 Gew.-% pyrogene Kieselsäure |
| E | 60 Gew.-% | 40 Gew.-% Microsilica |
| F | 40 Gew.-% | 60 Gew.-% Microsilica |

**Tabelle 2**

| Beispiel | Recyclefeed-Anteil in Charge | Recyclefeed | VQ |
|---|---|---|---|
| VB* | -- | -- | 0,09 |
| 1 | 35 Gew.-% | C | 0,30 |
| 2 | 30 Gew.-% | C | 0,24 |
| 3 | 25 Gew.-% | C | 0,21 |
| 4 | 20 Gew.-% | C | 0,15 |
| 5 | 10 Gew.-% | C | 0,13 |
| 6 | 5 Gew.-% | C | 0,11 |
| 7 | 1 Gew.-% | C | 0,10 |
| 8 | 5 Gew.-% | E | 0,12 |
| 9 ** | 5 Gew.-% | E | 0,15 |
| 10 *** | 5 Gew.-% | E | 0,14 |
| 11 | 5 Gew.-% | A | 0,13 |
| 12 | 5 Gew.-% | B | 0,11 |
| 13 | 5 Gew.-% | D | 0,12 |
| 14 | 5 Gew.-% | F | 0,17 |

| | | | |
|---|---|---|---|
| * nicht erfindungsgemäß * d50 zwischen 100 und 150 mm *** d50 zwischen 50 und 75 mm | | | |

## Patentansprüche

1. Verfahren zur Herstellung von metallurgischem Silicium, bei dem eine Mischung aus
einer Rohstoffmischung, die Siliciumdioxid und Kohlenstoff enthält
und einem Recyclefeed, das Organosiliciumverbindungen enthält,
in einem elektrischen Ofen umgesetzt wird.

2. Verfahren nach Anspruch 1, bei dem der Recyclefeed mindestens 50 Gew.-% an Organosiliciumverbindungen enthält.

3. Verfahren nach einem oder mehreren der voranstehenden Ansprüche, bei dem der Recyclefeed eine Partikelmischung ist dessen Partikelgrößenparameter d₅₀ mindestens 1 mm beträgt.

4. Verfahren nach einem oder mehreren der voranstehenden Ansprüche, bei dem das Siliciumdioxid in der Rohstoffmischung aus Quarz und Quarzit ausgewählt wird.

5. Verfahren nach einem oder mehreren der voranstehenden Ansprüche, bei dem der Kohlenstoff in der Rohstoffmischung aus Koks, Petrolkoks, Steinkohle, Holzkohle und Holzteilchen ausgewählt wird.

6. Verfahren nach einem oder mehreren der voranstehenden Ansprüche, bei dem der Anteil des Recyclefeeds, bezogen auf die Summe aus Rohstoffmischung und Recyclefeed, höchstens 20 Gew.-% beträgt.

## Claims

1. Process for producing metallurgical silicon,
wherein a mixture of
a raw material mixture containing silicon dioxide and carbon
and a recycle feed containing organosilicon compounds is reacted in an electric furnace.

2. Process according to Claim 1, wherein the recycle feed contains at least 50% by weight of organosilicon compounds.

3. Process according to one or more of the preceding claims, wherein the recycle feed is a particle mixture whose particle size parameter d₅₀ is at least 1 mm.

4. Process according to one or more of the preceding claims, wherein the silicon dioxide in the raw material mixture is selected from quartz and quartzite.

5. Process according to one or more of the preceding claims, wherein the carbon in the raw material mixture is selected from coke, petroleum coke, bituminous coke, charcoal and wood particles.

6. Process according to one or more of the preceding claims, wherein the proportion of the recycle feed based on the sum of the raw material mixture and the recycle feed is not more than 20% by weight.

## Revendications

1. Procédé pour la préparation de silicium métallurgique, dans lequel un mélange composé
d'un mélange de matières premières qui contient du dioxyde de silicium et du carbone
et d'une alimentation de recyclage qui contient des composés organiques siliciés,
est transformé dans un four électrique.

2. Procédé selon la revendication 1, dans lequel l'alimentation de recyclage contient au moins 50 % en poids de composés organiques siliciés.

3. Procédé selon l'une ou plusieurs des revendications précédentes, dans lequel l'alimentation de recyclage est un mélange de particules dont le paramètre de taille de particule d₅₀ est d'au moins 1 mm.

4. Procédé selon l'une ou plusieurs des revendications précédentes, dans lequel le dioxyde de silicium dans le mélange de matières premières est choisi parmi du quartz et de la quartzite.

5. Procédé selon l'une ou plusieurs des revendications précédentes, dans lequel le carbone dans le mélange de matières premières est choisi parmi du coke, du coke de pétrole, de la houille, du charbon de bois et des particules de bois.

6. Procédé selon l'une ou plusieurs des revendications précédentes, dans lequel la proportion de l'alimentation de recyclage, par rapport à la somme du mélange de matières premières et de l'alimentation de recyclage, est d'au plus de 20 % en poids.
